# EUROPEAN PATENT SPECIFICATION

(11) **EP 1 973 723 B1**
(45) Date of publication and mention of the grant of the patent: **31.08.2011**
(21) Application number: 07713101.9
(22) Date of filing: 04.01.2007
(51) Int. Cl.: B29C 65/18, B65D 77/20, B65B 7/28

(54) **TOOL AND METHOD FOR HEAT SEALING LIDSTOCKS TO PLASTIC CONTAINERS**
WERKZEUG UND VERFAHREN ZUR HEISSSIEGELUNG EINES DECKELBANDES AN KUNSTSTOFFBEHÄLTER
OUTIL ET PROCEDE DE THERMOSOUDAGE D UN COUVERCLE

(30) Priority: 05.01.2006 GB 0600145
(43) Date of publication of application: 01.10.2008
(73) Proprietor: BAUSCH & LOMB INCORPORATED, Rochester, NY 14604-2701 (US)
(72) Inventor: SULLIVAN, Jerry, Waterford (IE); HENNESSY, Eoin, Waterford (IE); FAHY, Kevin, Waterford (IE)
(74) Representative: Glas, Holger
(86) International application number: PCT/IB2007/000515
(87) International publication number: WO 2007/077533

(56) References cited:
- EP-A1- 0 683 110
- FR-A1- 2 687 633

## Description

### Field of the Invention

The invention relates to heat sealing tools for sealing lidstock (5) to plastic containers to form sealed packages, particularly disposable packages for contact lenses known as blister packages (6).

### Background to the Invention

Soft hydrogel contact lenses have been increasing in popularity ever since they were first introduced in the 1970's. Such contact lenses are conventionally packaged in the hydrated state and in a storage solution. Many contact lenses are packaged, along with the aqueous storage solution, in a disposable blister package (6) typically formed from a rigid polymer. Examples of blister packages can be seen in US Patent Nos. 4,691,820; 5,524,419; 5,578,331,5,649,410, 5,722,536 and 6,082,533. The base of a blister package (6) can either be part of the original contact lens mould or a separately moulded base, typically formed from a rigid polymer. In the above mentioned package types, the base that contains the contact lens and any aqueous storage solution, is sealed by a flexible lidstock (5). This lidstock (5) is typically a laminated foil which can be pulled back by a user to access the lens contained in the base. Typically, this lidstock (5) is sealed to the area surrounding the portion of the base containing the contact lens. This sealing area of the base has typically been a substantially flat surface area, or a raised flattened annular surface as seen, for example, in US Patent No. 5,722,536.

FR 2687633 discloses a container that includes a protective cover heat sealed on a peripheral track of the outer edge of the container, the track forming, with the wall of the container, an angle of less than 90 degrees. This arrangement makes it possible to increase considerably the resistance of the heat-sealing to rupture through the effect of shearing forces generated by an internal overpressure in the container originating, for example, from a heat treatment. Unexpected opening of the container, which would make the contents unsuitable for consumption, is thus prevented.

EP 0683110 describes a lid for a container body having a side wall portion at one end of which an annular portion extends at an obtuse angle to the side wall to define the mouth of the container. The lid has an elastically deformable central panel and a peripheral annular flange which extends downwardly and outwardly from the central panel to define a seal surface to co-operate with the annular portion of the body. When adhered or fused together the inclined portion of the lid and body receive the stress, arising as a thermal processing increases the volume of product packed, as a load in shear peel force being minimised.

However, it has been found that this sealing area, whether raised or not, can pose problems during the sealing process. If a moulding process is used to form the blister package (6), for example, the material may have some shrinkage, resulting in somewhat concave or convex sealing surface rather than a flat surface. Although to the naked eye, the sealing surface may seem flat, the curvature may be sufficient to lead to a poor seal between the lidstock (5) and the sealing surface of the package.

The sealing tool for sealing the lidstock (5) to the flange (4) of a plastic container typically has a lower face which supports the container directly below the flange (4), and an upper face which presses the lidstock (5) against the surface sealing surface of the flange (4) of the package, supported by the lower face which is in contact with the lower surface of the flange (4) of the package. Typically, the upper face is heated in order to provide a seat by melting a thermoplastic basal layer of the lidstock (5) to the sealing surface of the flange (4). Prior art sealing tools generally have flat faces where they contact the lidstock (5) and lower surfaces of the flange (4) of the package for sealing.

One method to improve seal reliability would be to increase the sealing pressure or temperature applied by the tool. However this can also lead to increased strength of the seal or weld formed, such that the consumer may have difficulties in removing the lidstock (5) from the rest of the package when opening the package. This is undesirable and can lead to spillage of the contents of the package.

Accordingly, it is an object of the present invention to provide a heat sealing tool for sealing the tidstock (5) onto blister packages (6) that provides improved seal reliability while maintaining ease of opening.

### Summary of the Invention

A first aspect of the invention provides a heat sealing tool for sealing a lidstock (5) to a rigid polymeric container comprising a well (7) and a flange (4) having a curved upper sealing surface and a lower surface wherein the tool comprises a first plate (1) adapted to contact the lower surface of the flange (4) and a second plate (3) adapted to press the lidstock (5) against the sealing surface of the flange (4), wherein the second plate (3) is curved with substantially the same curvature as the sealing surface of the flange (4). Preferably, the first plate (1) is also curved with substantially the same curvature as the lower surface of the flange (4). Ideally the second plate (3) is curved with an identical curvature as the sealing surface of the flange (4) and the first plate (1) is curved with an identical curvature as the lower surface of the flange (4).

By providing the second plate (3) with substantially the same curvature as the curved sealing surface of the flange (4), when the second plate (3) comes into contact with the lidstock (5) to press the lidstock (5) against the sealing surface of the flange (4), substantially uniform contact time and contact pressure will be delivered over the sealing surface of the flange (4), leading to greater uniformity in the strength of the seal over the entire flange (4). This uniformity may be further improved by providing the first plate (1) with substantially the same curvature as the lower surface of the flange (4), such that as the plates are squeezed together sandwiching the lidstock (5) and the flange (4), substantially uniform pressure is applied over the entire sealing surface of the flange (4) over the entire time span of the sealing process.

### Description of Preferred Embodiments

It has been found that the moulding process, typically thermoforming, conventionally used to form the rigid polymeric container of the blister package (6), may lead to uneven shrinkage of the container after moulding, and this leads to the sealing surface of the flange (4) of the container taking on a concave or a convex shape. This curvature may not be readily visible to the naked eye, and the radius of curvature may be established by measuring the elevation of the blister ends from a flat reference surface.

Although the curvature may be small (i.e. the radius of curvature is large), it may be sufficient to lead to significant differences in seal strength over the sealing surface of the flange (4) if flat plates are used for the heat sealing tool.

Suitably, in use, the first plate (1) is not heated and is at ambient temperature, while the second plate (3) is heated to a suitable temperature such that a hermetic seal is formed by heat transmitted through the lidstock (5) when the plates are brought together to sandwich the lidstock (5) and flange (4).

The lidstock (5) is suitably a laminated foil with a basal layer which melts to form a seal when heated in contact with the sealing surface of the flange (4). Preferably, the upper layer of the laminated foil is a surface upon which printing may be carried out. A suitable upper layer is a metal foil such as aluminium foil.

The container is suitably moulded from a rigid polymer, for example a thermoplastic polymer such as polypropylene or polystyrene. The container comprises a well (7) for holding the material to be packaged, such as a soft contact lens with hydrating solution, and has a flange (4) around the well (7) to which the lidstock (5) is sealed to form the sealed package. The flange (4) may simply be the top surface of the package itself, or may be in the form of a raised area surrounding the well (7) and provided on the top surface of the package. The sealing surface of the flange (4) may be all or part of the upper surface of the flange (4), provided the sealing surface surrounds the well (7) such that when a seal is made, the contents of the well (7) are hermetically sealed. The nature of the moulding process can lead to the top surface of the package and hence the flange (4), and the sealing surface of the flange (4), having a concave or a convex upper surface. This may arise from uneven shrinkage of the polymer forming the container during the moulding process to form the well (7).

Where the container starts as a flat sheet of polymer and then is moulded simply to form a well (7), leaving the remaining surface as the flange (4) of the well (7), the upper sealing surface of the flange (4) and the lower surface of the flange (4) will be endowed with the same curvature as a result of the uneven tensions set up in the moulding process, but with the upper surface being concave and the lower surface convex or vice versa.

Another aspect of the invention is concerned with a method for providing a heat sealing tool according to the first aspect of the invention, comprising the steps of preparing a rigid polymeric container comprising a well (7) and a flange (4) with a curved upper sealing surface and a lower surface, measuring the curvature of the upper sealing surface and preparing a second plate (3) for the heat sealing tool having substantially the same curvature as the upper sealing surface.

The method may further comprise the steps of measuring the curvature of the lower surface of the flange (4) and preparing a first plate (1) for the heat sealing tool having substantially the same curvature as the lower surface of the flange (4).

Typically, many examples of polymeric containers will be prepared and measured such that the average curvature may be used for preparing the curvatures of the second (3) and/or first plates (1) for the heat sealing tool.

The curvature of the lower and upper sealing surfaces of the flange (4) may be measured by any suitable means such as microscopy or interferometry.

Furthermore, herein disclosed is a method for sealing a lidstock (5) to a rigid polymeric container comprising a well (7) and a flange (4) with a curved upper sealing surface and a lower surface using a heat sealing tool comprising a first plate (1) adapted to contact the lower surface of the flange (4) and a second plate (3) adapted to press the lidstock (5) against the sealing surface of the flange (4), wherein the second plate (3) is curved with the same curvature as the sealing surface of the flange (4). Preferably, the first plate (1) is curved with the same curvature as the lower surface of the flange (4).

In order to better control the strength of the seal made by heat sealing tools according the invention, it is preferred if the tools are calibrated such that when the first (1) and second plates (3) are brought together to sandwich the lidstock (5) and the flange (4) of the container, the force applied is controlled within a preferred range. Such a calibration may be achieved by means of pressure or displacement readings on the plates, and associated calculation formulae. However, a preferred method is to use a strain sensing load cell (such as a semiconductor load cell) mounted into a replica blister package with the surface of the load cell at the same position as the sealing surface of the blister package (6) to be used with the tool of the invention. The replica blister package (6) is mounted onto the first plate (1) and then the first (1) and second plates (3) are brought together to their normal sealing position and the applied force shown by a display monitor connected to the load cell. The normal sealing position may then be adjusted and set to give the required sealing force as shown by the display.

### Drawing

The invention will now be further described, by way of example only, with reference to the accompanying drawing.

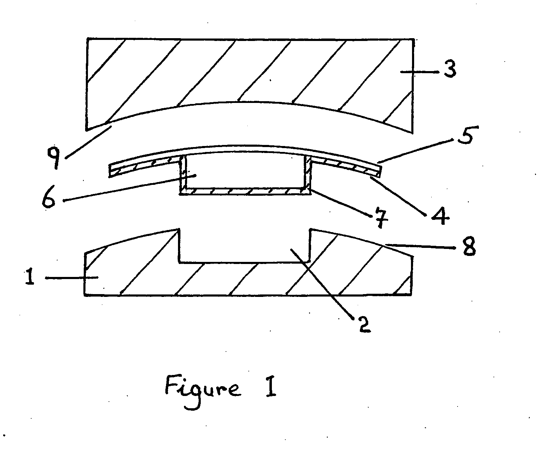

Figure 1 shows an exploded view of a tool according to the invention with a sealed blister pack (6) between the plates of the tool. The curvature of the surfaces has been greatly exaggerated.

The lower first part 1 of the tool has a recess 2 in the first face 8 to accommodate well 7 of the blister pack as sealing takes place. The lidstock 5 is in contact with the upper sealing surface of the flange 4 of the blister pack 6. The first face 8 is curved with the same curvature as the lower surface of the flange 4. The second face 9 of the upper second part 3 of the tool is curved with the same curvature as the upper sealing surface of the flange 4.

## Claims

1. A method for providing a heat sealing tool for sealing a lidstock (5) to a rigid polymeric container comprising a well (7) and a flange (4) with a curved upper sealing surface and a lower surface wherein the tool comprises a first plate (1) adapted to contact the lower surface of the flange (4) and a second plate (3) adapted to press the lidstock (5) against the sealing surface of the flange (4), wherein the second plate (3) is curved with substantially the same curvature as the sealing surface of the flange (4), comprising the steps of preparing a rigid polymeric container comprising a well (7) and a flange (4) with a curved upper sealing surface and a lower surface, measuring the curvature of the upper sealing surface and preparing a second plate (3) for the heat sealing tool having substantially the same or an identical curvature as the upper sealing surface.

2. A method according to claim 1 further comprising the steps of measuring the curvature of the lower surface of the flange (4) and preparing a first plate (1) for the heat sealing tool having substantially the same or an identical curvature as the lower surface of the flange (4).

3. A method according to claim 1 or 2 using a heat sealing tool for sealing a lidstock (5) to a rigid polymeric container comprising a well (7) and a flange (4) with a curved upper sealing surface and a lower surface wherein the tool comprises a first plate (1) adapted to contact the lower surface of the flange (4) and a second plate (3) adapted to press the lidstock (5) against the sealing surface of the flange (4), wherein the second plate (3) is curved with substantially the same curvature as the sealing surface of the flange (4).

4. A method according to claim 3, wherein the second plate (3) is curved with an identical curvature as the sealing surface of the flange (4).

5. A method according to claim 3 or 4, wherein the first plate (1) is curved with substantially the same curvature as the lower surface of the flange (4).

6. A method according to claim 5, wherein the first plate (1) is curved with an identical curvature as the lower surface of the flange (4).

## Patentansprüche

1. Ein Verfahren zur Herstellung eines Heißsiegelwerkzeugs zur Siegelung einer Deckelfolie (5) auf einen festen Polymerbehälter, welcher eine Vertiefung (7) und einen Flansch (4) mit einer gebogenen oberen Dichtfläche und einer unteren Fläche umfasst, wobei das Werkzeug eine erste Platte (1), welche so angepasst ist, dass sie die untere Fläche des Flansches (4) berühren kann, und eine zweite Platte (3), welche so angepasst ist, dass sie die Deckelfolie (5) gegen die zu siegelnde Fläche des Flansches (4) pressen kann, umfasst, wobei die zweite Platte (3) im Wesentlichen mit derselben Krümmung wie die Dichtfläche des Flansches (4) gebogen ist, umfassend die Schritte der Herstellung eines festen Polymerbehälters, welcher eine Vertiefung (7) und einen Flansch (4) mit einer gebogenen oberen Dichtfläche und einer unteren Fläche umfasst, der Messung der Krümmung der oberen Dichtfläche und der Herstellung einer zweiten Platte (3) für das Heißsiegelwerkzeug, welche im Wesentlichen dieselbe oder identische Krümmung wie die obere Dichtfläche aufweist.

2. Ein Verfahren gemäß Anspruch 1, weiterhin umfassend die Schritte der Vermessung der unteren Fläche des Flansches (4) und das Herstellen einer ersten Platte (1) für das Heißsiegelwerkzeug, welche im Wesentlichen dieselbe oder identische Krümmung wie die untere Fläche des Flansches (4) aufweist.

3. Ein Verfahren gemäß den Ansprüchen 1 oder 2, wobei ein Heißsiegelwerkzeug zur Siegelung einer Deckelfolie (5) auf einen festen Polymerbehälter verwendet wird, welcher eine Vertiefung (7) und einen Flansch (4) mit einer gebogenen oberen Dichtfläche und einer unteren Fläche umfasst, wobei das Werkzeug eine erste Platte (1), welche so angepasst ist, dass sie die untere Fläche des Flansches (4) berühren kann, und eine zweite Platte (3), welche so angepasst ist, dass sie die Deckelfolie (5) gegen die zu siegelnde Fläche des Flansches (4) pressen kann, umfasst, wobei die zweite Platte (3) im Wesentlichen mit derselben Krümmung wie die Dichtfläche des Flansches (4) gebogen ist.

4. Ein Verfahren gemäß Anspruch 3, wobei die zweite Platte (3) mit einer identischen Krümmung wie die Dichtfläche des Flansches (4) gebogen ist.

5. Ein Verfahren gemäß den Ansprüchen 3 oder 4, wobei die erste Platte (1) im Wesentlichen mit derselben Krümmung wie die untere Fläche des Flansches (4) gebogen ist.

6. Ein Verfahren gemäß Anspruch 5, wobei die erste Platte (1) mit einer identischen Krümmung wie die untere Fläche des Flansches (4) gebogen ist.

## Revendications

1. Procédé pour fournir un outil de thermosoudage pour souder un couvercle (5) sur un récipient polymère rigide comprenant une cavité (7) et une collerette (4) avec une surface d'étanchéité supérieure incurvée et une surface inférieure, dans lequel l'outil comprend une première plaque (1) adaptée pour entrer en contact avec la surface inférieure de la collerette (4) et une deuxième plaque (3) adaptée pour comprimer le couvercle (5) contre la surface d'étanchéité de la collerette (4), dans lequel la deuxième plaque (3) est incurvée sensiblement avec la même courbure que la surface d'étanchéité de la collerette (4), comprenant les étapes consistant à préparer un récipient polymère rigide comprenant une cavité (7) et une collerette (4) avec une surface d'étanchéité supérieure incurvée et une surface inférieure, mesurer la courbure de la surface d'étanchéité supérieure et préparer une deuxième plaque (3) pour l'outil de thermosoudage ayant sensiblement la même courbure ou une courbure identique à la surface d'étanchéité supérieure.

2. Procédé selon la revendication 1, comprenant en outre les étapes consistant à mesurer la courbure de la surface inférieure de la collerette (4) et préparer une première plaque (1) pour l'outil de thermosoudage ayant sensiblement la même courbure ou une courbure identique à la surface inférieure de la collerette (4).

3. Procédé selon la revendication 1 ou 2, utilisant un outil de thermosoudage pour souder un couvercle (5) sur un récipient polymère rigide comprenant une cavité (7) et une collerette (4) avec une surface d'étanchéité supérieure incurvée et une surface inférieure, dans lequel l'outil comprend une première plaque (1) adaptée pour venir en contact avec la surface inférieure de la collerette (4) et une deuxième plaque (3) adaptée pour comprimer le couvercle (5) contre la surface d'étanchéité de la collerette (4), dans lequel la deuxième plaque (3) est incurvée sensiblement avec la même courbure que la surface d'étanchéité de la collerette (4).

4. Procédé selon la revendication 3, dans lequel la deuxième plaque (3) est incurvée avec une courbure identique à la surface d'étanchéité de la collerette (4).

5. Procédé selon la revendication 3 ou 4, dans lequel la première plaque (1) est incurvée sensiblement avec la même courbure que la surface inférieure de la collerette (4).

6. Procédé selon la revendication 5, dans lequel la première plaque (1) est incurvée avec une courbure identique à la surface inférieure de la collerette (4).
